# EUROPEAN PATENT APPLICATION

(11) **EP 1 643 794 A1**
(43) Date of publication of application: **05.04.2006**
(21) Application number: 05255910.1
(22) Date of filing: 22.09.2005
(51) Int. Cl.: H04Q 7/38

(54) **Reordering of data packets during soft hand offs in a wireless system**

(30) Priority: 30.09.2004 US 957072
(71) Applicant: LUCENT TECHNOLOGIES INC., Murray Hill, New Jersey 07974-0636 (US)
(72) Inventor: Tech, Hu, Bud Lake, NJ 07828 (US)
(74) Representative: Sarup, David Alexander

(57) **Abstract**

A method for controlling communications between a mobile device and a pair of base stations during a soft hand off (SHO) mode of operation in a wireless system using HARQ is provided. To accommodate out-of-order data packets received at the base stations during SHO, a sequence number is formed and transmitted to the Radio Network Controller (RNC). The RNC is configured to combine the data packets received from the base stations and then use the sequence numbers to re-order the combined data packets.

## Description

### BACKGROUND OF THE INVENTION

### 1. FIELD OF THE INVENTION

This invention relates generally to telecommunications, and, more particularly, to wireless communications.

### 2. DESCRIPTION OF THE RELATED ART

In the field of wireless telecommunications, such as cellular telephony, a system typically includes a plurality of base stations distributed within an area to be serviced by the system. Various users within the area, fixed or mobile, may then access the system and, thus, other interconnected telecommunications systems, via one or more of the base stations. Typically, a mobile device maintains communications with the system as the mobile device passes through an area by communicating with one and then another base station, as the user moves. The mobile device may communicate with the closest base station, the base station with the strongest signal, the base station with a capacity sufficient to accept communications, *etc.*

Commonly, as the mobile device transitions from one base station to another, there is a period of time during which the mobile device may be communicating with more than one base station. The process of transitioning the mobile device from one base station to another is commonly referred to as soft hand off (SHO). During SHO, both base stations may be receiving communications from the mobile device.

In some telecommunications systems, communications between the mobile devices and the base stations are accomplished using a Hybrid Automatic Repeat Request (HARQ) channel encoding technique to improve the performance. Generally, in an uplink communications system employing HARQ, a transmitter, such as the mobile device, sends information to a receiver, such as the base station. If the base station properly receives the information, an acknowledgment signal (ACK) is sent back to the mobile device and the process ends. On the other hand, if the base station detects an error in the received information, then it sends a negative acknowledgment signal (NACK) to the mobile device. The mobile device responds to the NACK by retransmitting the varied set of encoded information. The process repeats until the mobile device receives an ACK from the base station or a preselected number of attempts (e.g., three) are made.

If the mobile device continues to broadcast packets of information, interspersed with the retransmission of old information, then the packets of information may be received out-of-order. Typically, this out-of-order reception is handled by putting a header in the information that includes a sequence number. In the uplink, the base station may use the sequence numbers to re-order the packets of information. However, due to the multiplicity of base stations in SHO, performing the re-ordering at each base station would be inefficient since only one correctly received packet would be accepted at the RNC.

The HARQ technique, however, can be problematic during SHO. Since the mobile device is communicating with more than one base station (e.g., two base stations, A and B) during SHO, it is highly possible that base station A will receive the information properly and return an ACK, while base station B may not, returning a NACK instead. Retransmitting the packet to base station B may result in the packets being out-of-order in base station B, whereas base station A would receive the packets in the correct order. Thus, reordering the packets received at the base station, in this example in base station B may waste resources since the packets were received in the proper order by base station A and would be forwarded correctly to the RNC.

The present invention is directed to overcoming, or at least reducing, the effects of one or more of the problems set forth above.

### SUMMARY OF THE INVENTION

In one aspect of the instant invention, a method is provided for re-ordering packets of data received at a radio network controller during soft hand off. The method comprises associating a sequence number with a packet of information; receiving the packet of information at the radio network controller; and identifying a location in a plurality of packets of information stored in the radio network controller based on the sequence number associated with the packet of information

### BRIEF DESCRIPTION OF THE DRAWINGS

The invention may be understood by reference to the following description taken in conjunction with the accompanying drawings, in which like reference numerals identify like elements, and in which:
Figure 1 is a block diagram of a communications system, in accordance with one embodiment of the present invention;
Figure 2 conceptually illustrates a first embodiment of an uplink channel and a downlink channel, such as may be used to transmit packets in the wireless telecommunication system shown in Figure 1, in accordance with the present invention;
Figure 3 is a flow diagram illustrating the operation of a base station of Figure 1; and
Figure 4 is a flow diagram illustrating the operation of a Radio Network Controller (RNC) of Figure 1
While the invention is susceptible to various modifications and alternative forms, specific embodiments thereof have been shown by way of example in the drawings and are herein described in detail. It should be understood, however, that the description herein of specific embodiments is not intended to limit the invention to the particular forms disclosed, but on the contrary, the intention is to cover all modifications, equivalents, and alternatives falling within the spirit and scope of the invention as defined by the appended claims.

### DETAILED DESCRIPTION OF SPECIFIC EMBODIMENTS

Illustrative embodiments of the invention are described below. In the interest of clarity, not all features of an actual implementation are described in this specification. It will of course be appreciated that in the development of any such actual embodiment, numerous implementation-specific decisions may be made to achieve the developers' specific goals, such as compliance with system-related and business-related constraints, which may vary from one implementation to another. Moreover, it will be appreciated that such a development effort might be complex and time-consuming, but may nevertheless be a routine undertaking for those of ordinary skill in the art having the benefit of this disclosure.

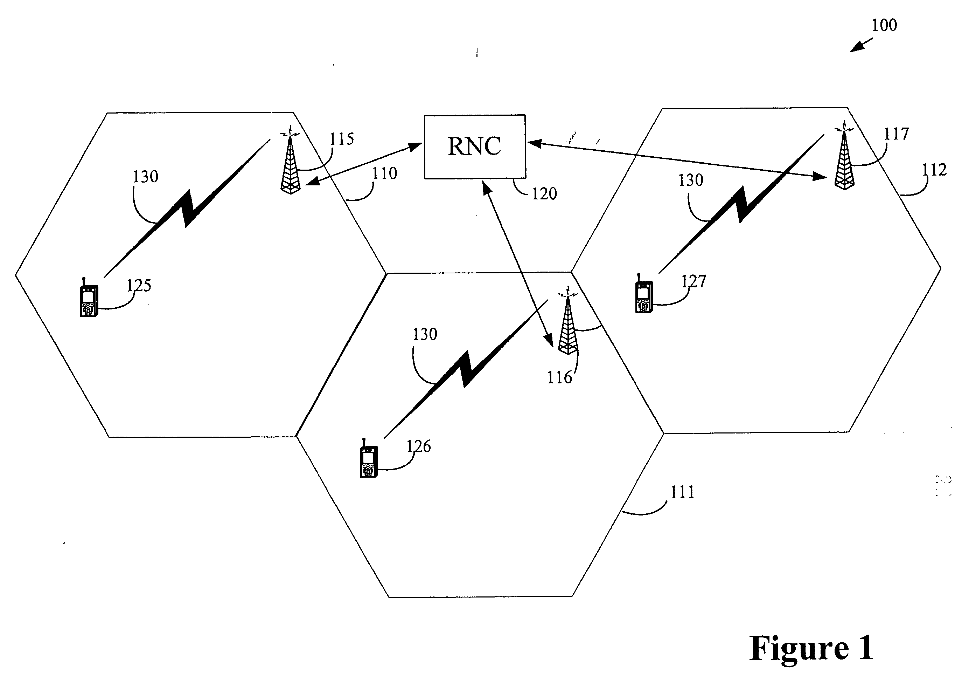

Turning now to the drawings, and specifically referring to Figure 1, one embodiment of a wireless telecommunication system 100 is conceptually illustrated. In the illustrated embodiment, a plurality of cells 110, 111, 112 are distributed over a geographic area. Each cell is served by a base station 115, 116, 117, and a plurality of the base stations 115, 116, 117 are served by a common Radio Network Controller (RNC) 120. Mobile devices 125, 126, 127 are free to move about the geographic area, communicating with the base stations 115, 116, 117 over a wireless telecommunication link 130. Although only a single mobile device 125, 126, 127 is shown in each cell 110, 111, 112, those skilled in the art will appreciate that each of the base stations 115, 116, 117 is capable of supporting a large number of mobile devices 115, 116, 117. In alternative embodiments, additional mobile units and/or base stations, as well as other desirable devices, may be included in the wireless telecommunication system 100. For example, the wireless telecommunication system 100 may include a mobile switching center, as well as various routers, switches, hubs, and the like.

The wireless telecommunication link 130 supports one or more channels that may be used to transmit messages between the mobile units 125, 126, 127 and the base stations 115, 116, 117. The channels may be defined in any desirable manner. For example, the channels may be determined according to protocols such as Universal Mobile Telecommunication System (UMTS), Code Division Multiple Access (CDMA), Time Division Multiple Access (TDMA), Personal Communication System (PCS), Global System for Mobile telecommunications (GSM), and the like. The wireless telecommunication link 130 may also support one or more packet retransmission and/or error recovery protocols. For example, the wireless telecommunication link 130 may support an Automatic Repeat Request (ARQ) protocol, a Hybrid Automatic Repeat Request (HARQ) protocol, and the like.

Generally, the RNC 120 operates to control and coordinate the base stations 130 to which it is connected. The RNC 120 of Figure 1 generally provides replication, communications, runtime, and system management services, and, as discussed below in more detail below, may be responsible for reordering packets of information received from the mobile devices 125, 126, 127 during SHO between the base stations 115, 116, 117.

Generally, the mobile devices 125, 126, 127 have a first and second status in which each may operate. In the first status, the mobile devices 125, 126, 127 are in contact with a plurality of the base stations 115, 116, 117, which is sometimes referred to as a soft hand off ("SHO") or rate controlled mode of operation. In the second status, the "time scheduled" mode of operation, the mobile device 125, 126, 127 are in contact with only one of the base stations 115, 116, 117, which is called the serving base station. The methodology described herein is useful during those times when the mobile devices 125, 126, 127 are in the SHO mode of operation. The following description and drawings are presented with reference to the mobile devices 125, 126, 127 being in the SHO mode of operation. A detailed discussion of the "time scheduled" mode of operation is not presented herein so as to avoid unnecessarily obfuscating the instant invention.

Unless specifically stated otherwise, or as is apparent from the discussion, terms such as "processing" or "computing" or "calculating" or "determining" or "displaying" or the like, refer to the action and processes of a computer system, or similar electronic computing device, that manipulates and transforms data represented as physical, electronic quantities within the computer system's registers and memories into other data similarly represented as physical quantities within the computer system's memories or registers or other such information storage, transmission or display devices.

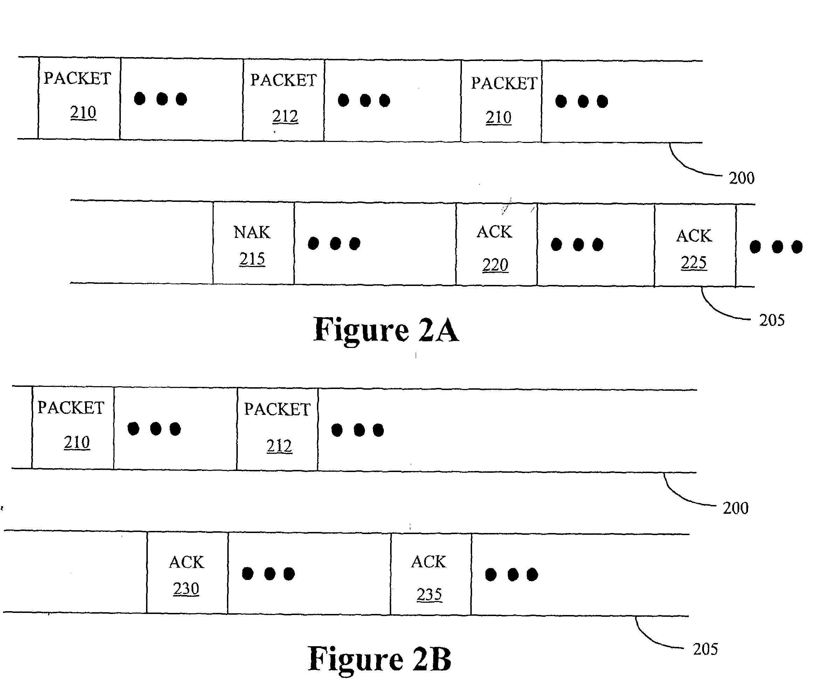

Figure 2A conceptually illustrates a first embodiment of an uplink channel 200 and a downlink channel 205, such as may be used to transmit packets between the mobile unit 125 and the base station 115 during the SHO mode of operation. The uplink channel may be an enhanced dedicated channel (E-DCH), such as defined by UMTS release 6. In the illustrated embodiment of Figure 2A, a first packet 210 is transmitted on the uplink channel 200, but the base station 115 is unable to detect and/or decode the first packet 210, so a negative acknowledgement (NAK) 215 is transmitted on the downlink channel 205. A second packet of information 212, however, may be transmitted prior to receiving the NAK 215. Upon receiving the NAK 215, the first packet 210 is retransmitted on the uplink channel 205. The second packet 212 is successfully detected and decoded, and so an acknowledgement (ACK) 220 is transmitted on the downlink channel 205. Similarly, if the retransmitted packet 210 is successfully detected and decoded, an acknowledgement (ACK) 225 is transmitted on the downlink channel 205. Thus, the packets 210, 212 are received by the base station in a reverse order, and may need to be reordered.

Figure 2B conceptually illustrates the operation of the uplink channel 200 and the downlink channel 205, such as may be used to transmit packets of information between the mobile unit 125 and the base stations 116 during the SHO mode of operation. The uplink channel 200 may be an enhanced dedicated channel (E-DCH), such as defined by UMTS release 6. In the illustrated embodiment of Figure 2B, the first packet 210 is transmitted on the uplink channel 200, and the base station 116 successfully detects and/or decodes the first packet 210, so an acknowledgement (ACK) 230 is transmitted on the downlink channel 205. The second packet of information 212 is then transmitted over the uplink channel 200. The second packet 212 is also successfully detected and decoded, and so an ACK 235 is transmitted on the downlink channel 205. Thus, the packets 210, 212 are received by the base station 116 in the correct order, and need not be reordered.

In one embodiment of the instant invention, the re-ordering functionality is located in the RNC 120. To take advantage of selection combining gains from the base stations 115, 116, 117, the transport channel bit of a successfully decoded uplink packet on the Enhanced Data Channel (EDCH) is sent to the RNC 120 over an IUB interface. For the RNC 120 to perform re-ordering functions, each of the received packets is identified by a sequence number, henceforth referred to as the Transmission Sequence Number (TSN).

At the RNC 120, the re-ordering may be performed for each priority queue. A different priority queue may be used for traffic or data that needs to be sent with different Quality of Service (QoS), as an example. In an in-sequence delivery of packets to the RNC 120, the following would be true: the RNC 120 receives packet #1 from the base station 116, packet #2 from the base station 117, packet #3 from the base station 115 and so on. In this case, the packets are received in the correct order from different base stations. However, out-of-sequence delivery to the RNC 120 may result from:
1. The support of more than one HARQ process could result in an out-of-sequence delivery even though a fully synchronous HARQ operation is assumed. This is caused by the different number of retransmissions needed for each HARQ process to successfully transmit the packet in its process. As a result, the RNC 120 would receive packet #3 from the base station 126, packet #1 from the base station 126, packet #2 from the base station 125, and so on. Here, the packets sent from the base station 126 are sent in an incorrect order;
2. In addition to the NodeB receiving the correctly decoded packet at different order, packets could also arrive at the RNC at time staggered manner due to the non-perfectly time aligned of the NodeB timing, and also due to the Iub transport delay variations. In such as case, the SRNC would receive packet #3 from NodeB2, packet #1 from NodeB3, packet #2 from NodeB 1 and so on.

To support re-ordering at the RNC, the use of Transmission Sequence Number (TSN) or equivalent over the IUB is used. This TSN is inserted by the base station 115, 116, 117 on either per MAC-eu PDU or MAC-es PDU basis. Setting the TSN per MAC-eu PDU may limit the data that can be sent in the PDU to only a single priority. The benefit is that only a single TSN is required. If more than one priority data is contained in the MAC-eu PDU, then more than one TSN field may be required to support each of the priorities.

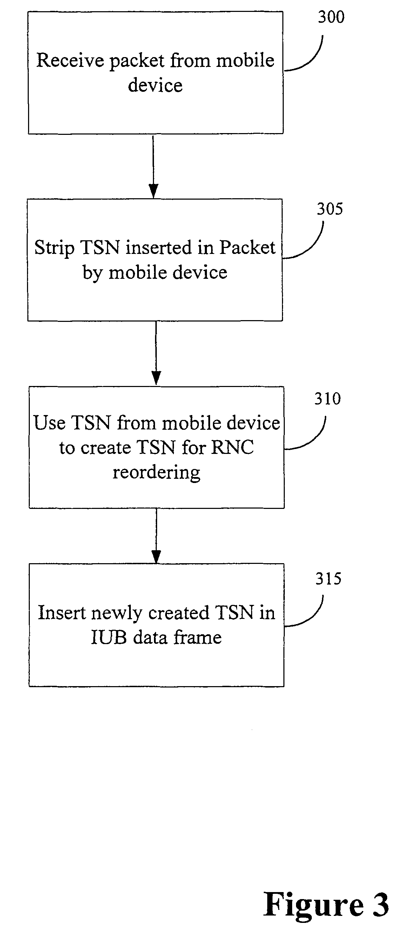

Inserting the TSN at the IUB level allows the RNC 120 to read the TSN from the IUB data frame and would treat the transport bit as pure payload. There is no need for the RNC 120 to "peek" into the payload to see the TSN as is the case if the mobile device-inserted payload is used for RNC re-ordering. In one embodiment of the instant invention illustrated in the flowchart of Figure 3, the base station 115 receives a packet of information from the mobile device 125 (at 300). The base station 115 strips the packet header from the packet of information received from the mobile device 115 (at 305). The packet header contains the TSN inserted by the mobile device 125. The base station 115 then uses the TSN contained in the packet header to form an equivalent or related TSN that may be used by the RNC 120 to re-order the packets of information (at 310). The newly created TSN is then inserted into an IUB data frame (at 315) and subsequently transmitted to the RNC 120..

The TSN inserted by the base stations 115, 116, 117 for the RNC 120 may be a direct mapping to the TSN as inserted by the mobile device 125, 126, 127. The TSN may be configured as part of the transport channel bits or as a separate field in the IUB data frame. In both options, the overhead is the same. The size for the TSN may be a function of the total number of retransmissions and total number of HARQ processes. At this point, it is proposed to be FFS.

To protect against stalls in the re-ordering buffer, it may be useful to allow the base stations to actively flush the re-ordering buffer or to cause the buffer to automatically flush if a preselected period of time passes without the buffer being cleared. Packets may be aborted by the mobile device for reasons such as reaching the maximum number of retransmissions, power limitations, and/or pre-emption by a higher priority packet. When any of these scenarios occur, the RNC 120 would be waiting for a packet at the re-ordering buffer, but one would never arrive. For the RNC 120 to pass the subsequent in-sequence packets to the next layer, a timer mechanism may be used to automatically "flush" the re-ordering buffer. Upon expiration of a preselected period of time, the timer mechanism may signal the RNC 120 to forward the remaining packets to the next layer.

Alternatively, two other mechanisms may be employed to prevent such a stalled condition. For example, in the first alternative, a single bit flush indicator may be employed. In this embodiment, the base station sets the single bit flush indicator field, which when received by the RNC 120, causes the RNC 120 to flush all remaining gaps in its re-ordering buffer. In the second alternative, a zero packet IUB data frame with a specific TSN number may be delivered from the base station to the RNC 120. When the RNC 120 receives the zero packet IUB data frame, it considers the packet to be correctly received, and thus, since all of the packets have now been received by the buffer, the packets are forwarded to the next layer.

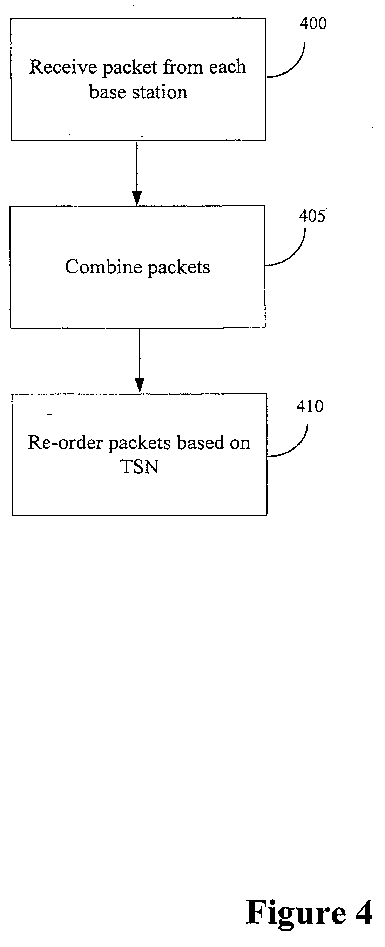

Turning now to Figure 4, the process of combining and re-ordering the information packets received at the RNC 120 is shown. The RNC receives like packets of information from each of the base stations 115, 116, 117 participating in the SHO (at 400). Using conventional techniques, the related packets of information received from the base stations 115, 116, 117 are combined in an effort to more reliably insure that the packets of information are accurate (at 405). The combined packets are then re-ordered, as necessary, based on the TSN created by the base station 115, 116, 117 (at 410).

While the SHO mode of operation has been described above in the context of two base stations, base station A and base station B, those skilled in the art will appreciate that the SHO mode of operation may involve three or more base stations (e.g., base station A, base station B, base station C ...). Where three or more base stations are involved, the timing associated with the first base station, A, is retained to communicate with all of the other base stations, A, B, ...) regardless of the order in which the base stations are removed from the active list of the UE 120. For example, assume a UE 120 is initially communicating with A but subsequently enters into the SHO mode of operation with B and then C, such that all three base stations are in the UE 120 active set. If A is removed from the active set, leaving B and C in the active set, the UE 120 nonetheless continues to communicate with B and C using the timing information associated with A. As long as the UE 120 remains in the SHO mode of operation, it will continue to use the timing information associated with A until only one base station remains in its active set, at which time the UE 120 will resynchronize with the timing information associated with its now lone base station.

Those skilled in the art will appreciate that the various system layers, routines, or modules illustrated in the various embodiments herein may be executable control units. The controllers may include a microprocessor, a microcontroller, a digital signal processor, a processor card (including one or more microprocessors or controllers), or other control or computing devices. The storage devices referred to in this discussion may include one or more machine-readable storage media for storing data and instructions. The storage media may include different forms of memory including semiconductor memory devices such as dynamic or static random access memories (DRAMs or SRAMs), erasable and programmable read-only memories (EPROMs), electrically erasable and programmable read-only memories (EEPROMs) and flash memories; magnetic disks such as fixed, floppy, removable disks; other magnetic media including tape; and optical media such as compact disks (CDs) or digital video disks (DVDs). Instructions that make up the various software layers, routines, or modules in the various systems may be stored in respective storage devices. The instructions when executed by the controllers cause the corresponding system to perform programmed acts.

The particular embodiments disclosed above are illustrative only, as the invention may be modified and practiced in different but equivalent manners apparent to those skilled in the art having the benefit of the teachings herein. Furthermore, no limitations are intended to the details of construction or design herein shown, other than as described in the claims below. Consequently, the method, system and portions thereof and of the described method and system may be implemented in different locations, such as the wireless unit, the base station, a base station controller and/or mobile switching center. Moreover, processing circuitry required to implement and use the described system may be implemented in application specific integrated circuits, software-driven processing circuitry, firmware, programmable logic devices, hardware, discrete components or arrangements of the above components as would be understood by one of ordinary skill in the art with the benefit of this disclosure. It is therefore evident that the particular embodiments disclosed above may be altered or modified and all such variations are considered within the scope and spirit of the invention. Accordingly, the protection sought herein is as set forth in the claims below.

## Claims

1. A method for re-ordering packets of data received at a radio network controller during soft hand off, comprising:
associating a sequence number with a packet of information;
receiving the packet of information at the radio network controller; and
identifying a location in a plurality of packets of information stored in the radio network controller based on the sequence number associated with the packet of information.

2. A method, as set forth in claim 1, wherein associating a sequence number with a packet of information further comprises:
receiving a packet of information from a mobile device, wherein the packet of information has a sequence number assigned by the mobile device; and
using the sequence number assigned by the mobile device to form a new sequence number.

3. A method, as set forth in claim 2, wherein receiving the packet of information at the radio network controller further comprises receiving the packet of information at the radio network controller over an IUB interface. A method, as set forth in claim 3, wherein receiving the packet of information at the radio network controller over the IUB interface further comprises receiving the packet of information at the radio network controller with the new sequence number contained in an IUB data frame.
